# EUROPÄISCHE PATENTSCHRIFT

(11) **EP 2 612 381 B1**
(45) Veröffentlichungstag und Bekanntmachung des Hinweises auf die Patenterteilung: **11.10.2017**
(21) Anmeldenummer: 11743224.5
(22) Anmeldetag: 27.07.2011
(51) Int. Cl.: H01M 2/10, H01M 2/20

(54) **GEHÄUSE ZUR AUFNAHME WENIGSTENS EINER AKKUZELLE**
HOUSING FOR ACCOMMODATING AT LEAST ONE RECHARGEABLE BATTERY CELL
BOÎTIER POUR ACCUEILLIR AU MOINS UNE CELLULE D'ACCUMULATEUR

(30) Priorität: 01.09.2010 DE 102010040109
(43) Veröffentlichungstag der Anmeldung: 10.07.2013
(73) Patentinhaber: Robert Bosch GmbH, 70442 Stuttgart (DE)
(72) Erfinder: MATTHIAS, Wolf, 70469 Stuttgart (DE); HEINRICH, Thomas, 71397 Nellmersbach (DE); BAUMGARTNER, Josef, 70376 Stuttgart (DE)
(86) Internationale Anmeldenummer: PCT/EP2011/062908
(87) Internationale Veröffentlichungsnummer: WO 2012/028392

(56) Entgegenhaltungen:
- EP-A1- 0 528 478
- EP-A2- 2 224 512
- WO-A1-2010/047255
- DE-U1-202008 012 599
- US-A1- 2007 132 429

## Beschreibung

### Stand der Technik

Die Erfindung betrifft ein Gehäuse zur Aufnahme wenigstens einer Akkuzelle nach dem Oberbegriff des Anspruchs 1. Ein derartiges Gehäuse ist aus der DE 10 2004 043 822 A1 bekannt. Hierbei dient das Gehäuse insbesondere der Ausbildung eines sogenannten Akkupacks, welcher mit einem Elektrowerkzeug, z.B. einem Akkuschrauber oder ähnlichem verbindbar ist. Zum Aufladen des Akkupacks wird dabei das Gehäuse von dem Elektrowerkzeug abgenommen und mit einer Ladestation elektrisch kontaktiert. Die innerhalb des Gehäuses angeordneten Akkuzellen sind entsprechend der Fig. 4 aus der DE 10 2004 043 822 A1 beispielsweise mit Zellenverbindern in Form von Blechstanzteilen elektrisch miteinander kontaktiert. Die Zellenverbinder sind mit in der Schrift nicht dargestellten Verbindungsleitungen insbesondere mit einem Anschlussbereich des Gehäuses verbunden, der die elektrische Kontaktierung zum Elektrowerkzeug bzw. zur Ladestation herstellt. Aus Gründen der Raumökonomie und beispielsweise der besseren Wärmeabfuhr umschließt das bekannte Gehäuse die Akkuzellen mit relativ geringem oder gar keinem Spalt. Daher ist die Führung bzw. Verlegung der Verbindungsleitungen zum Anschlussbereich von den Zellenverbindern auf der dem Anschlussbereich gegenüberliegenden Seite des Gehäuses zum Anschlussbereich relativ schwierig bzw. es besteht die Gefahr, dass bei der Montage der Verbindungsleitungen diese beispielsweise beschädigt werden und es so während des Betriebs des Akkupacks zu Kurzschlüssen oder ähnlichem kommen kann.

Aus der EP 0 528 478 A1 ist ferner ein Akkupack mit einem Gehäuse zur Aufnahme wenigstens einer Akkuzelle bekannt, wobei wenigstens eine Verbindungsleitung auf die der Verbindungsstelle mit der Akkuzelle gegenüberliegenden Seite der Akkuzelle geführt ist. Das Gehäuse weist einen separaten Kabelkanal auf, in dem die wenigstens eine Verbindungsleitung von der wenigstens einen Akkuzelle räumlich getrennt geführt ist.

### Offenbarung der Erfindung

Ausgehend von dem dargestellten Stand der Technik liegt der Erfindung die Aufgabe zugrunde, ein Gehäuse zur Aufnahme wenigstens einer Akkuzelle nach dem Oberbegriff des Anspruchs 1 derart weiterzubilden, dass die Gefahr von Beschädigungen bzw. Beeinträchtigungen während des Betriebs mit einer mit dem Gehäuse bzw. in Akkuzellen verbundenen Vorrichtung verhindert wird. Diese Aufgabe wird bei einem Gehäuse zur Aufnahme wenigstens einer Akkuzelle mit den Merkmalen des Anspruchs 1 gelöst. Der Erfindung liegt dabei die Idee zugrunde, dass beim Einsatz mehrerer Akkuzellen diese einen Zellenverbinder aufweisen und dass der Zellenverbinder mit wenigstens einer Verbindungsleitung verbunden ist, wobei jeweils mehrere Akkuzellen mit einem separaten Zellenverbinder verbunden sind, und dass zumindest mehrere der Verbindungsleitungen zu den Zellenverbindern durch einen gemeinsamen Kabelkanal geführt sind. Auf diese Weise kann verhindert werden, dass die wenigstens eine Verbindungsleitung mit der wenigstens einen Akkuzelle in Verbindung bzw. Berührung geraten kann. Dadurch werden Kurzschlüsse oder ähnliches zwischen der Verbindungsleitung und der wenigstens einen Akkuzelle sicher verhindert.

Vorteilhafte Weiterbildungen des erfindungsgemäßen Gehäuses zur Aufnahme wenigstens einer Akkuzelle sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

Um einerseits das Durchführen der wenigstens einen Verbindungsleitung zu erleichtern und gleichzeitig Beschädigungen z.B. in Form von Knicken od. ähnlichem in der Verbindungsleitung zu vermeiden, wird in einer vorteilhaften Ausgestaltung der Erfindung vorgeschlagen, dass der Querschnitt des Kabelkanals dem Querschnitt der wenigstens einen Verbindungsleitung angepasst ist. Eine derartige Lösung hat darüber hinaus den Vorteil, dass der Platz- bzw. Raumbedarf des Gehäuses insgesamt gesehen nur minimal vergrößert wird.

Es kann auch vorgesehen sein, dass der Kabelkanal der Führung mehrerer Verbindungsleitungen dient. Dadurch wird der Aufwand für die Kabelkanäle minimiert, da nur eine relativ geringe Anzahl von Kabelkanälen erforderlich ist.

In einer konkreten Ausgestaltung der Erfindung, die einen besonders geringen Montageaufwand bei relativ geringen Herstellungskosten erfordert, wird vorgeschlagen, dass das Gehäuse mehrteilig ausgebildet ist und dass der Kabelkanal einstückig zumindest mit einem der Gehäuseteile verbunden ist, wobei das betreffende Gehäuseteil und der Kabelkanal als Spritzgussteil ausgebildet ist.

In einer besonders bevorzugten Variante ist es dabei vorgesehen, dass durch einen Zwischenraum zwischen mehreren Aufnahmen, die die Akkuzellen an deren Umfang umschließen, der Kabelkanal ausgebildet wird.

Alternativ hierzu ist es auch möglich, dass das Gehäuse mehrteilig ausgebildet ist und dass der Kabelkanal als separates Bauteil ausgebildet und mit wenigstens einem der Gehäuseteile verbunden ist. Dadurch lässt sich die Konstruktion des Gehäuseteils relativ einfach gestalten.

Bei letztgenannter Variante ist es darüber hinaus vorteilhaft, dass wenigstens eines der Gehäuseteile eine Aufnahme zur Befestigung des Kabelkanals aufweist. Dadurch wird eine definierte Führung des Kabelkanals im Gehäuse ermöglicht und Geräusche infolge von Relativbewegungen zwischen Kabelkanal und Gehäuseteilen verhindert.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:

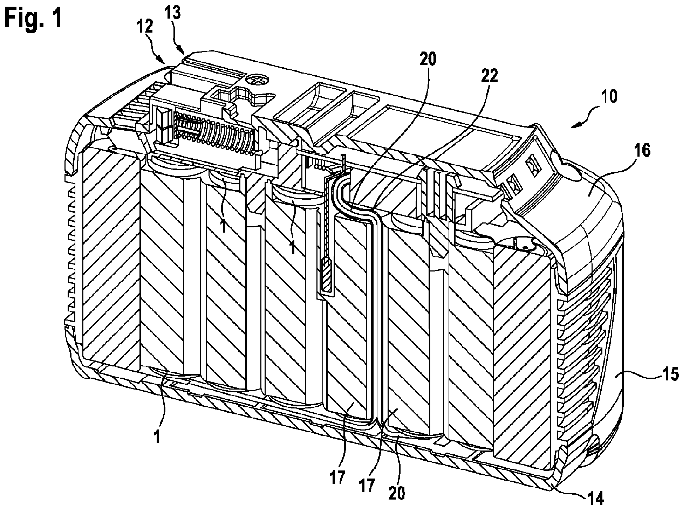

- Fig. 1: einen Längsschnitt durch ein erfindungsgemäßes Gehäuse zur Aufnahme wenigstens einer Akkuzelle,
- Fig. 2: eine perspektivische Ansicht auf einen Teil des Gehäuses gemäß Fig. 1, ohne die Darstellung eines Gehäusebodens und

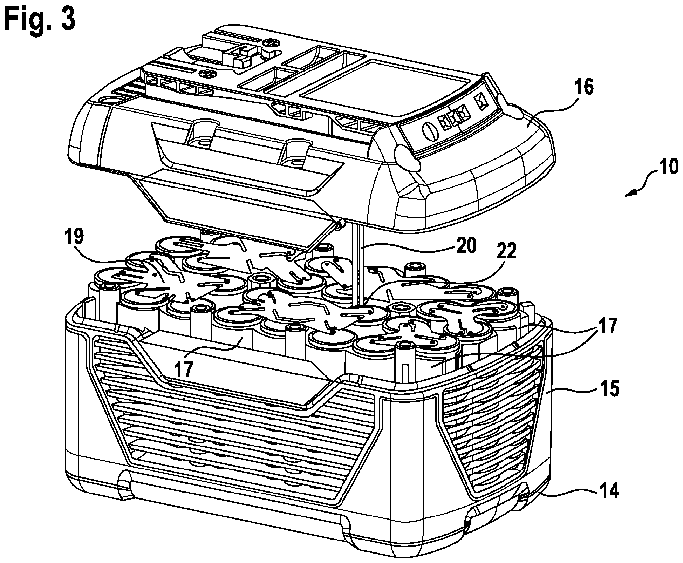

- Fig. 3: eine Explosionsdarstellung des Gehäuses.

In den Figuren ist ein erfindungsgemäßes Gehäuse 10 zur Aufnahme von mehreren Akkuzellen 1 dargestellt. Das Gehäuse 10 bildet hierbei insbesondere einen sogenannten Akkupack aus, der mit einer nicht dargestellten, elektromotorisch betriebenen Vorrichtung, insbesondere einer Handwerkzeugmaschine, lösbar verbunden ist. Zum Aufladen der Akkuzellen 1 an einer nicht dargestellten Ladestation wird hierbei das Gehäuse 10 in Wirkverbindung mit der Ladestation gebracht, während zum Betrieb der Vorrichtung das Gehäuse 10 in Wirkverbindung mit der Vorrichtung gebracht wird. Hierzu weist das Gehäuse 10 beispielhaft an der Außenseite des Gehäuses 10 angeordnete elektrische Kontakte 12, 13 auf, die mit entsprechenden Gegenkontakten der Vorrichtung bzw. der Ladestation elektrisch kontaktierbar sind.

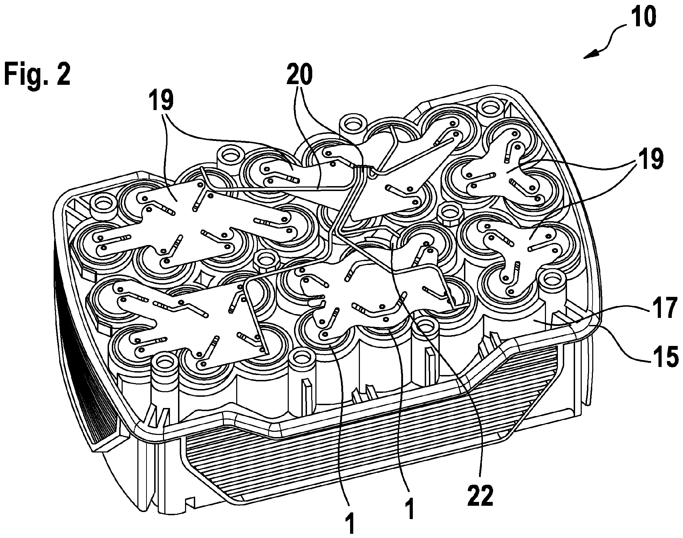

Das Gehäuse 10 ist im dargestellten Ausführungsbeispiel mehrteilig ausgebildet und besteht aus einem Bodenteil 14, einem Mittelteil 15 und einem Deckelteil 16. Die einzelnen Teile sind hierbei insbesondere miteinander verrastbar und ggf. zusätzlich miteinander verschraubt und als Spritzgussteile ausgebildet. In dem Mittelteil 15 sind ferner in der Fig. 2 erkennbare Aufnahmen 17 für die Akkuzellen 1 angeordnet bzw. ausgebildet, die die Akkuzellen 1 an ihrem Außenumfang zumindest teilweise formschlüssig umfassen und die der Positionierung bzw. Fixierung der Akkuzellen 1 im Gehäuse 10 dienen. Hierbei überragen die Aufnahmen 17 den äußeren Bereich des Mittelteils 15 und ragen bei montiertem Gehäuse 10 in das Deckellteil 16 hinein.

Aus der Fig. 2 ist erkennbar, dass jeweils eine bestimmte Anzahl von Akkuzellen 1, im dargestellten Ausführungsbeispiel entweder drei Akkuzellen 1 oder sechs Akkuzellen 1, mit jeweils einem als Blechstanzteil ausgebildeten Zellenverbinder 19 miteinander elektrisch verbunden sind. Hierbei sind die Zellenverbinder 19 jeweils mit dem entsprechenden einen Pol der Akkuzelle 1, z.B. durch eine Punktschweißverbindung, elektrisch kontaktiert. Die Zellenverbinder 19 sind sowohl im Bereich des Bodenteils 14 als auch im Bereich des Deckelteils 16 des Gehäuses 10 angeordnet, und müssen zur Verbindung mit den elektrischen Kontakten 12, 13, die sich im Deckelteil 16 befinden, mittels Verbindungsleitungen 20, von denen lediglich die Verbindungsleitungen 20 im Bereich der Zellenverbinder 19 des Bodenteils 14 dargestellt sind, zumindest mittelbar mit den Kontakten 12, 13 elektrisch kontaktiert werden.

Die Verbindungsleitungen 20 werden dabei entlang den Längsseiten der zylindrisch ausgebildeten Akkuzellen 1 von dem Bereich des Bodenteils 14 , in denen sich die einen Zellenverbinder 19 befinden, bis über die andere Stirnseite der Akkuzellen 1 im Bereich des Deckelteils 16 zu den elektrischen Kontakten 12, 13 geführt. Die Führung der Verbindungsleitungen 20 erfolgt dabei erfindungsgemäß parallel zu der Längserstreckung der Akkuzellen 1 in Zwischenräumen zwischen den Aufnahmen 17 für die Akkuzellen 1 im Mittelteil 15. Diese Zwischenräume bilden wenigstens einen Kabelkanal 22 zur Führung der Verbindungsleitungen 20 aus.

Der bzw. die Kabelkanäle 22 sind somit einstückig am Gehäuse 10 bzw. dessen Mittelteil 15 über die Ausbildung der Aufnahmen 17 für die Akkuzellen 1 angeformt. Es kann auch vorgesehen sein, derartige Kabelkanäle 22 an anderer Stelle des Gehäuses 10, das heißt außerhalb der Zwischenräume zwischen den Aufnahmen 17 auszubilden bzw. vorzusehen. Auch hier können die Kabelkanäle 22 einstückig am Gehäuse 10 ausgebildet sein.

In einer weiteren, ebenfalls nicht dargestellten Ausführungsform ist es auch denkbar, dass wenigstens ein Kabelkanal 22 als separates Bauteil ausgebildet ist. In diesem Fall kann es vorgesehen sein, dass das Bauteil mit einem der Gehäuseteile zum Beispiel über eine Rastaufnahme mit dem Gehäuse 10 verbunden bzw. positioniert ist.

Der Querschnitt des Kabelkanals 22 ist derart bemessen, dass eine bzw. mehrere Verbindungsleitungen 20 innerhalb des Kabelkanals 20 mit relativ geringem Radialspiel vom Innern des Kabelkanals 22 umgeben sind. Die Länge der Kabelkanäle 22 ist derart, dass diese in etwa der Länge der Akkuzellen 1 in deren Längsrichtung entsprechen. Hierbei fluchten die jeweiligen Stirnseiten des Kabelkanals 22 in etwa mit den jeweiligen Stirnseiten der Akkuzellen 1 bzw. der Kabelkanal 22 weist eine etwas geringere Länge auf als die Längserstreckung der Akkuzellen 1.

Das soweit beschriebene erfindungsgemäße Gehäuse 10 zur Aufnahme wenigstens einer Akkuzelle 1 kann in vielfältiger Art und Weise abgewandelt bzw. modifiziert werden, ohne vom Erfindungsgedanken abzuweichen. Dieser besteht in der Anordnung bzw. in dem Vorsehen eines zusätzlichen Kabelkanals 22 zur Führung wenigstens einer Verbindungsleitung 20, der bzw. die wenigstens eine Verbindungsleitung 20 von der bzw. den Akkuzellen 1 räumlich trennen und somit eine direkte Berührung der Verbindungsleitungen 20 mit den Akkuzellen 1 verhindern.

## Patentansprüche

1. Akkupack mit einem Gehäuse (10) zur Aufnahme von wenigstens einer Akkuzelle (1), mit einem Anschlussbereich zur elektrischen Kontaktierung des Gehäuses (10) mit einer elektromotorisch betriebenen Vorrichtung und mit wenigstens einer Verbindungsleitung (20) auf einer Seite der wenigstens einen Akkuzelle (1), mit der die wenigstens eine Akkuzelle (1) an einem Pol zumindest mittelbar elektrisch kontaktiert ist, wobei die wenigstens eine Verbindungsleitung (20) auf die der Verbindungsstelle mit der Akkuzelle (1) gegenüberliegenden Seite derAkkuzelle (1) geführt ist, und das Gehäuse (10) einen separaten Kabelkanal (22) aufweist, in dem die wenigstens eine Verbindungsleitung (20) von der wenigstens einen Akkuzelle (1) räumlich getrennt geführt ist, **dadurch gekennzeichnet, dass** beim Einsatz mehrerer Akkuzellen (1) diese einen Zellenverbinder (19) aufweisen und dass der Zellenverbinder (19) mit der wenigstens einen Verbindungsleitung (20) verbunden ist, wobei jeweils mehrere Akkuzellen (1) mit einem separaten Zellenverbinder (19) verbunden sind und dass zumindest mehrere der Verbindungsleitungen (20) zu den Zellenverbindern (19) durch einen gemeinsamen Kabelkanal (22) geführt sind.

2. Akkupack nach Anspruch 1, **dadurch gekennzeichnet, dass** die wenigstens eine Verbindungsleitung (20) parallel zur Erstreckung der Akkuzelle (1) auf die der Verbindungsstelle mit der Akkuzelle (1) gegenüberliegenden Seite der Akkuzelle (1) geführt ist.

3. Akkupack nach Anspruch 1 oder 2, **dadurch gekennzeichnet, dass** der Querschnitt des Kabelkanals (22) dem Querschnitt der wenigstens einen Verbindungsleitung (20) angepasst ist.

4. Akkupack nach einem der Ansprüche 1 bis 3, **dadurch gekennzeichnet, dass** der Kabelkanal (22) der Führung mehrerer Verbindungsleitungen (20) dient.

5. Akkupack nach einem der Ansprüche 1 bis 4, **dadurch gekennzeichnet, dass** das Gehäuse (10) mehrteilig ausgebildet ist und dass der Kabelkanal einstückig (22) zumindest an einem der Gehäuseteile (14, 15, 16) angeformt ist, wobei das betreffende Gehäuseteil (14, 15, 16) und der Kabelkanal (22) als Spritzgußteil ausgebildet ist.

6. Akkupack nach Anspruch 5, **dadurch gekennzeichnet, dass** an einem Gehäuseteil (15) Aufnahmen (17) fürAkkuzellen (1) ausgebildet sind und dass der Kabelkanal (22) durch einen Zwischenraum zwischen mehreren Aufnahmen (17) ausgebildet ist.

7. Akkupack nach einem der Ansprüche 1 bis 4, **dadurch gekennzeichnet, dass** das Gehäuse (10) mehrteilig ausgebildet ist und dass der Kabelkanal (22) als separates Bauteil ausgebildet und mit wenigstens einem der Gehäuseteile (14, 15, 16) verbunden ist.

8. Akkupack nach Anspruch 7, **dadurch gekennzeichnet, dass** wenigstens eines der Gehäuseteile (14, 15, 16) eine Aufnahme zur Befestigung des Kabelkanals (22) aufweist.

9. Akkupack nach einem der Ansprüche 1 bis 8, **dadurch gekennzeichnet, dass** die Länge des Kabelkanals (22) der Längserstreckung der Akkuzelle (1) entspricht und dass der Kabelkanal (22) in Höhe der Stirnseiten der Akkuzelle (1) mit dieser abschließt.

10. Akkupack nach einem der Ansprüche 1 bis 9, **dadurch gekennzeichnet, dass** der Zellverbinder (19) ein als Blechstanzteil ausgebildeter Zellenverbinder (19) ist.

11. Akkupack nach einem der vorhergehenden Ansprüche, **dadurch gekennzeichnet, dass** das Gehäuse (10) mehrteilig ausgebildet ist und einen Bodenteil (14), einen Mittelteil (15) und einen Deckelteil (16) umfasst, wobei in dem Mittelteil (15) Aufnahmen (17) für die Akkuzellen (1) ausgebildet sind, welche die Akkuzellen (1) an ihrem Außenumfang zumindest teilweise formschlüssig umfassen und der Positionierung bzw. Fixierung der Akkuzellen (1) dienen.

12. Akkupack nach Anspruch 11, **dadurch gekennzeichnet, dass** der Kabelkanal (22) zur Führung der Verbindungsleitungen (20) parallel zu der Längserstreckung der Akkuzellen (1) in einem Zwischenraum zwischen den Aufnahmen (17) im Mittelteil (15) ausgebildet ist.

## Claims

1. Battery pack having a housing (10) for accommodating at least one battery cell (1), having a connection region for the electrical contacting of the housing (10) with an electromotively operated device, and having at least one connecting line (20) on one side of the at least one battery cell (1), by means of which connecting line the at least one battery cell (1) is at least indirectly electrically contacted with a terminal, wherein the at least one connecting line (20) is led onto that side of the battery cell (1) which is situated opposite the connecting point to the battery cell (1), and the housing (10) has a separate cable duct (22) in which the at least one connecting line (20) is led spatially separately from the at least one battery cell (1), **characterized in that**, in the case of multiple battery cells (1) being used, said battery cells have a cell connector (19), and **in that** the cell connector (19) is connected to the at least one connecting line (20), wherein in each case multiple battery cells (1) are connected to a separate cell connector (19), and **in that** at least several of the connecting lines (20) are led to the cell connectors (19) through a common cable duct (22).

2. Battery pack according to Claim 1, **characterized in that** the at least one connecting line (20) is led parallel to the extent of the battery cell (1) onto that side of the battery cell (1) which is situated opposite the connecting point to the battery cell (1).

3. Battery pack according to Claim 1 or 2, **characterized in that** the cross section of the cable duct (22) is adapted to the cross section of the at least one connecting line (20).

4. Battery pack according to one of Claims 1 to 3, **characterized in that** the cable duct (22) serves for guiding multiple connecting lines (20).

5. Battery pack according to one of Claims 1 to 4, **characterized in that** the. housing (10) is' of multi-part form and **in that** the cable duct (22) is formed integrally at least on one of the housing parts (14, 15, 16), wherein the respective housing part (14, 15, 16) and the cable duct (22) are formed as an injection-moulded part.

6. Battery pack according to Claim 5, **characterized in that** receptacles (17) for battery cells (1) are formed on a housing part (15), and **in that** the cable duct (22) is formed by an intermediate space between multiple receptacles (17).

7. Battery pack according to one of Claims 1 to 4, **characterized in that** the housing (10) is of multi-part form, and **in that** the cable duct (22) is formed as a separate component and is connected to at least one of the housing parts (14, 15, 16).

8. Battery pack according to Claim 7, **characterized in that** at least one of the housing parts (14, 15, 16) has a receptacle for the fastening of the cable duct (22).

9. Battery pack according to one of Claims 1 to 8, **characterized in that** the length of the cable duct (22) corresponds to the longitudinal extent of the battery cell (1), and **in that** the cable duct (22) terminates at the level of the face sides of the battery cell (1) together with said battery cell.

10. Battery pack according to one of Claims 1 to 9, **characterized in that** the cell connector (19) is a cell connector (19) formed as a sheet-metal punched part.

11. Battery pack according to one of the preceding claims, **characterized in that** the housing (10) is of multi-part form and comprises a base part (14), a central part (15) and a cover part (16), wherein receptacles (17) for the battery cells (1) are formed in the central part (15), which receptacles surround the battery cells (1) at the outer circumference thereof in at least partially positively locking fashion and serve for the positioning and/or fixing of the battery cells (1).

12. Battery pack according to Claim 11, **characterized in that** the cable duct (22) for guiding the connecting lines (20) is formed parallel to the longitudinal extent of the battery cells (1) in an intermediate space between the receptacles (17) in the central part (15).

## Revendications

1. Bloc d'accumulateurs comprenant un boîtier (10) destiné à accueillir au moins une cellule d'accumulateur (1), comprenant une zone de raccordement destinée à mettre le boîtier (10) en contact électrique avec un dispositif entraîné par un moteur électrique et comprenant au moins une ligne de liaison (20) sur un côté de l'au moins une cellule d'accumulateur (1), avec lequel l'au moins une cellule d'accumulateur (1) est mise en contact électrique au moins indirectement au niveau d'un pôle, l'au moins une ligne de liaison (20) étant acheminée sur le côté de la cellule d'accumulateur (1) qui se trouve à l'opposé du point de liaison avec la cellule d'accumulateur (1), et le boîtier (10) possédant un chemin de câble (22) séparé dans lequel l'au moins une ligne de liaison (20) est acheminée en étant séparée dans l'espace de la cellule d'accumulateur (1), **caractérisé en ce que** lors de l'utilisation de plusieurs cellules d'accumulateur (1), celles-ci possèdent un connecteur à cellules (19) et **en ce que** le connecteur à cellules (19) est relié à l'au moins une ligne de liaison (20), plusieurs cellules d'accumulateur (1) étant respectivement reliées avec un connecteur à cellules (19) séparé, et **en ce qu'**au moins plusieurs des lignes de liaison (20) sont acheminées vers les connecteurs à cellules (19) au travers d'un chemin de câble (22) commun.

2. Bloc d'accumulateurs selon la revendication 1, **caractérisé en ce que** l'au moins une ligne de liaison (20) est acheminée parallèlement à l'extension de la cellule d'accumulateur (1) sur le côté de la cellule d'accumulateur (1) à l'opposé du point de liaison avec la cellule d'accumulateur (1).

3. Bloc d'accumulateurs selon la revendication 1 ou 2, **caractérisé en ce que** la section transversale du chemin de câble (22) est adaptée à la section transversale de l'au moins une ligne de liaison (20).

4. Bloc d'accumulateurs selon l'une des revendications 1 à 3, **caractérisé en ce que** le chemin de câble (22) sert à l'acheminement de plusieurs lignes de liaison (20).

5. Bloc d'accumulateurs selon l'une des revendications 1 à 4, **caractérisé en ce que** le boîtier (10) est réalisé en plusieurs parties et **en ce que** le chemin de câble (22) est façonné d'un seul tenant au moins sur l'une des parties de boîtier (14, 15, 16), la partie de boîtier (14, 15, 16) concernée et le chemin de câble (22) étant réalisés sous la forme d'une pièce moulée par injection.

6. Bloc d'accumulateurs selon la revendication 5, **caractérisé en ce que** des logements (17) pour des cellules d'accumulateur (1) sont réalisés sur une partie de boîtier (15), et **en ce que** le chemin de câble (22) est forme par un espace intermédiaire entre plusieurs logements (17).

7. Bloc d'accumulateurs selon l'une des revendications 1 à 4, **caractérisé en ce que** le boîtier (10) est réalisé en plusieurs parties et **en ce que** le chemin de câble (22) est réalisé sous la forme d'un élément structural séparé et il est relié à au moins l'une des parties de boîtier (14, 15, 16).

8. Bloc d'accumulateurs selon la revendication 7, **caractérisé en ce qu'**au moins l'une des parties de boîtier (14, 15, 16) possède un logement servant à la fixation du chemin de câble (22).

9. Bloc d'accumulateurs selon l'une des revendications 1 à 8, **caractérisé en ce que** la longueur du chemin de câble (22) correspond à l'extension longitudinale de la cellule d'accumulateur (1) et **en ce que** le chemin de câble (22) se termine à hauteur des côtés frontaux de la cellule d'accumulateur (1).

10. Bloc d'accumulateurs selon l'une des revendications 1 à 9, **caractérisé en ce que** le connecteur à cellules (19) est un connecteur à cellules (19) réalisé sous la forme d'une pièce en tôle emboutie.

11. Bloc d'accumulateurs selon l'une des revendications précédentes, **caractérisé en ce que** le boîtier (10) est réalisé en plusieurs parties et comprend une partie de fond (14), une partie centrale (15) et une partie de couvercle (16), des logements (17) pour les cellules d'accumulateur étant formées dans la partie centrale (15), lesquelles entourent au moins partiellement les cellules d'accumulateur (1) sur leur pourtour extérieur par complémentarité de formes et servent au positionnement ou à la fixation des cellules d'accumulateur (1).

12. Bloc d'accumulateurs selon la revendication 11, **caractérisé en ce que** le chemin de câble (22) est configuré pour l'acheminement des lignes de liaison (20) parallèlement à l'extension longitudinale des cellules d'accumulateur (1) dans un espace intermédiaire entre les logements (17) dans la partie centrale (15).
